**Europäisches Patentamt**

**European Patent Office**

**Office européen des brevets**

(11) Numéro de publication: **0 264 513**
**B1**

(12) **FASCICULE DE BREVET EUROPEEN**

(45) Date de publication du fascicule du brevet:
18.07.90

(21) Numéro de dépôt: 86402389.0

(22) Date de dépôt: 24.10.86

(51) Int. Cl.⁵: **B60K 17/348**

(54) Dispositif de transmission à quatre roues motrices.

(43) Date de publication de la demande:
**27.04.88 Bulletin 88/17**

(45) Mention de la délivrance du brevet:
**18.07.90 Bulletin 90/29**

(84) Etats contractants désignés:
**AT BE DE ES GB IT NL SE**

(56) Documents cités:
**EP-A- 0 068 309**
**EP-A- 0 236 178**
**DE-A- 3 334 905**
**FR-A- 2 168 763**
**FR-A- 2 586 773**
**GB-A- 2 074 516**
**GB-A- 2 098 148**
**GB-A- 2 139 972**
**US-A- 4 041 804**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Gil, Robert Marc, 43, rue des Saules,**
**F-78370 Plaisir(FR)**

(74) Mandataire: **Chassagnon, Jean-Alain et al, REGIE**
**NATIONALE DES USINES RENAULT (S.0804),**
**F-92109 Boulogne-Billancourt Cedex(FR)**

## Description

La présente invention se rapporte à un dispositif de transmission à quatre roues motrices, qui s'appliquent notamment sur les véhicules de tourismes automobiles.

On connaît de nombreux dispositifs à quatre roues motrices, qui comprennent une boîte de mécanisme en sortie de la boîte de vitesses, afin de transmettre le mouvement à l'essieu avant, et à l'essieu arrière. Chaque essieu comporte un différentiel disposé entre les roues, et qui reçoit le mouvement de la boîte de mécanisme. Certains dispositifs offrent de plus la présence d'un différentiel entre l'essieu avant et l'essieu arrière, ce différentiel étant disposé immédiatement en sortie de la boîte de mécanisme. Afin de ne pas augmenter considérablement la consommation de carburant, ces mécanismes permettent de fonctionner soit en deux roues motrices soit en quatre roues motrices. C'est pourquoi une commande à la disposition du conducteur permet de passer en quatre roues motrices. Ces dispositifs présentent l'inconvénient, lorsque l'on ait en deux roues motrices, de présenter un risque de perte d'adhérence sur une roue. Dans ce cas le conducteur du véhicule doit craboter très rapidement la transmission du véhicule en quatre roues motrices. Cette manœuvre de crabotage doit être faite à l'arrêt ou à très faible vitesse. De ce fait la manipulation de ces dispositifs à quatre roues motrices est très difficile, et de plus il est très délicat de la réaliser au meilleur moment. Enfin ce type de transmission demande au conducteur du véhicule une attention soutenue, qui s'effectue au détriement de la sécurité de la conduite.

Le but de la présente invention est de proposer un dispositif de transmission à quatre roues motrices, qui permet de rendre la manœuvre de crabotage en quatre roues motrices automatique; le dispositif s'adaptant parfaitement aux conditions d'adhérence de chacune des roues du véhicule.

A cet effet, le dispositif de transmission à quatre roues motrices selon l'invention, comprend en sortie de boîte de vitesse, un pignon d'attaque qui entraîne une couronne extérieure. Cette couronne extérieure comporte elle-même une denture intérieure, qui est en fait la couronne d'un différentiel central. Le planétaire de ce différentiel central commande l'un des essieus, et le porte-satellites commande l'autre essieu. Un système auto-freiné du type système visqueux est disposé entre le porte-satellites et le planétaire, de manière à transférer automatiquement une partie de l'énergie de l'essieu en perte d'adhérence sur l'autre essieu.

Le moteur et la boîte de vitesses sont disposés transversalement par rapport à l'axe longitudinal du véhicule; le système visqueux comprend un ensemble multidisques avec un fluide à viscosité contrôlée, qui est enfermé entre un moyeu, une couronne, un flasque d'appui, et un flasque de fermeture, et ayant des moyens d'étanchéité. Le système visqueux qui est disposé sur le différentiel central a:

— sa couronne, qui est solidaire du planétaire du différentiel central,

— son moyeu, qui est solidaire du porte-satellites, dudit différentiel central,

— son flasque d'appui, qui est solidaire de ladite couronne,

— son flasque de fermeture, qui est solidaire dudit planétaire,

— ses moyens d'étanchéité qui consistent en deux joints disposés entre ledit flasque de fermeture et ledit moyeu; et un joint disposé entre ledit planétaire, et le boîtier du différentiel avant, solidaire dudit flasque de fermeture; un système auto-freiné du type système visqueux est disposé entre les sorties de mouvement du différentiel, de l'essieu avant.

Selon un mode de réalisation de l'invention le dispositif de transmission à quatre roues motrices comprend en sortie de boîte de vitesses un pignon d'attaque entraînant une couronne extérieure, qui comporte une denture intérieure qui est la couronne du différentiel central, dont le planétaire commande l'un des essieux, et dont le porte-satellites commande l'autre essieu. Un système auto-freiné du type système visqueux est disposé entre le porte-satellites et le planétaire de manière à transférer automatiquement une partie de l'énergie de l'essieu en perte d'adhérence sur l'autre essieu. Le moteur et la boîte de vitesses sont disposés transversalement par rapport à l'axe longitudinal du véhicule. Le système visqueux comprend un ensemble multidisques avec un fluide à viscosité contrôlée, qui est enfermé entre un moyeu, une couronne un flasque d'appui et un flasque de fermeture et ayant des moyens d'étanchéité. Le système visqueux qui est disposé sur le différentiel central a:

son moyeu, qui est solidaire du flasque d'appui,

— sa couronne qui est solidaire du porte-satellites dudit différentiel central,

— son flasque d'appui, qui est solidaire du planétaire dudit différentiel central,

— son flasque de fermeture, qui est solidaire du porte-satellites (18) dudit différentiel central,

— ses moyens d'étanchéité qui consistent en un joint, disposé entre ledit flasque de fermeture et ledit moyeu; et un joint disposé entre ledit porte-satellites dudit différentiel central, et ledit flasque d'appui solidaire du boîtier du différentiel avant; un système auto-freiné du type système visqueux est disposé entre les sorties de mouvement du différentiel de l'essieu avant.

Selon une variante de l'invention un système auto-freiné est disposé sur les sorties de mouvement du différentiel de l'essieu arrière.

Selon un autre mode de réalisation de l'invention, le système visqueux, disposé sur le différentiel avant, a:

— son moyeu solidaire d'un arbre lié à l'un des planétaires, dudit différentiel avant;

— sa couronne solidaire du flasque d'appui, qui est lié à l'autre planétaire;

— son flasque de fermeture;

— ses moyens d'étanchéité, qui consistent en deux joints, disposés respectivement entre ledit moyeu et ledit flasque d'appui et ledit flasque de fermeture; et un joint disposé entre ledit flasque de fermeture et ladite couronne. La couronne, est liée à la roue correspondante au moyen d'un plateau d'accouplement solidaire de ladite couronne; ledit plateau d'accouplement étant centré dans le planétaire au moyen d'un arbre, et dont la position axiale est assurée par la butée dudit plateau, contre l'extrémité de ladite couronne, et un système d'arrêt. Le porte-satellites, du différentiel central comporte une denture extérieure qui commande un pignon; ledit pignon étant solidaire du couple conique de renvoi par l'intermédiaire d'un arbre de renvoi.

Le dispositif de transmission à quatre roues motrices selon l'invention présente ainsi l'avantage d'offrir une grande sécurité. En effet, en cas de perte d'adhérence de l'une quelconque des roues, la transmission passe immédiatement en quatre roues motrices. L'attention du conducteur peut ainsi se consacrer uniquement à la conduite de son véhicule, ce qui augmente considérablement la sécurité surtout en cas de mauvaises conditions climatiques. De plus l'ensemble du dispositif est compact et plus léger, ce qui entraîne un prix de revient réduit. Enfin le dispositif selon l'invention permet une grande souplesse de passage du couple moteur entre l'essieu avant et l'essieu arrière.

D'autres caractéristiques et avantages de la présente invention ressortiront de la description qui suit de mode de réalisation donné à titre d'exemple en référence aux dessins annexés sur lesquels:

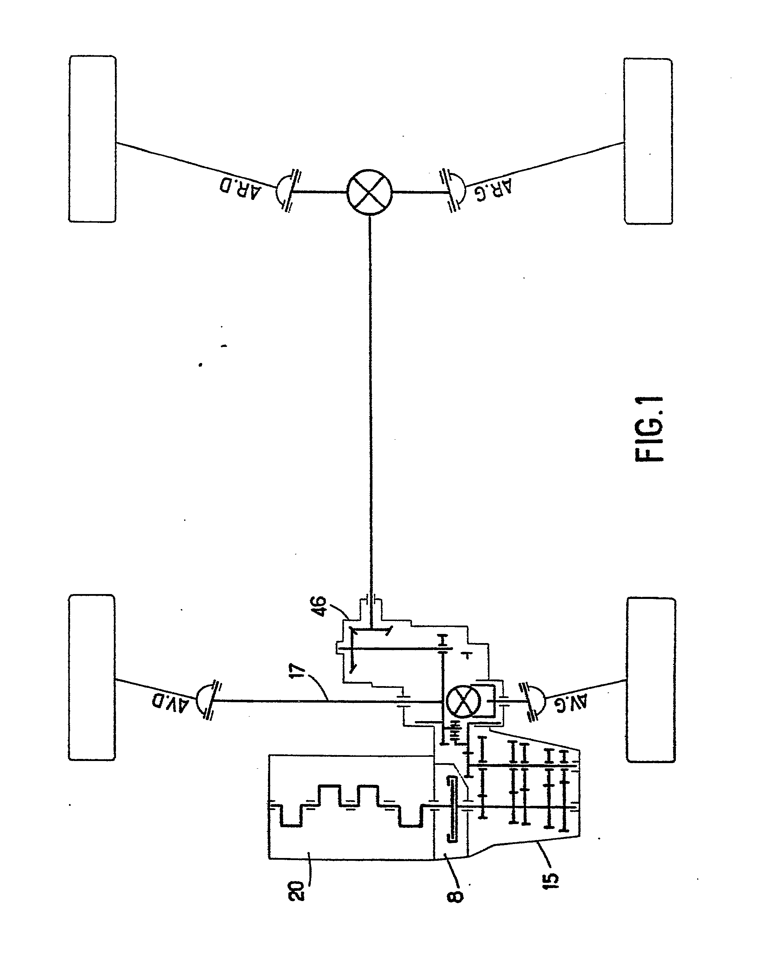

— la figure 1 est une vue extérieure de dessus développée de l'ensemble de la transmission selon l'invention;
— la figure 2 est une demie-vue en coupe correspondant à la figure 1;
— la figure 3 est une demie-vue en coupe correspondant à la figure 1 d'un autre mode de réalisation;

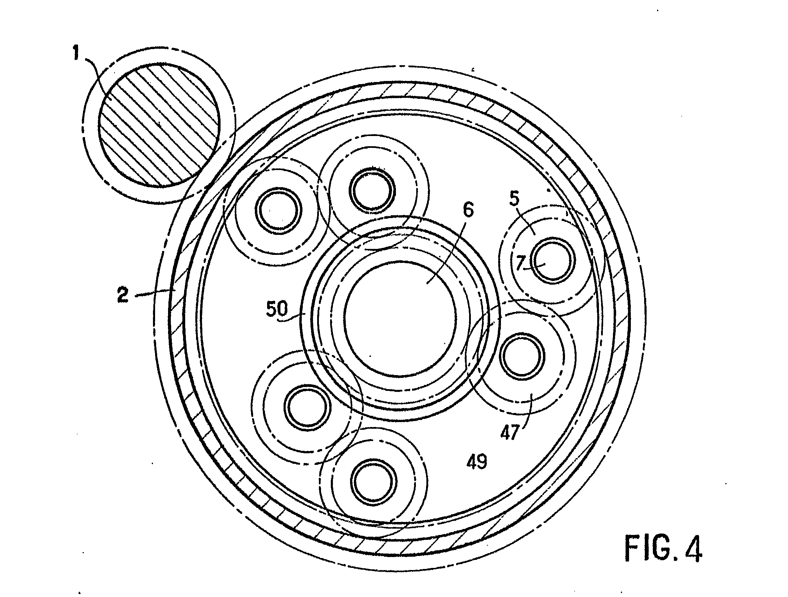

— la figure 4 est une vue suivant IV de la figure 2;

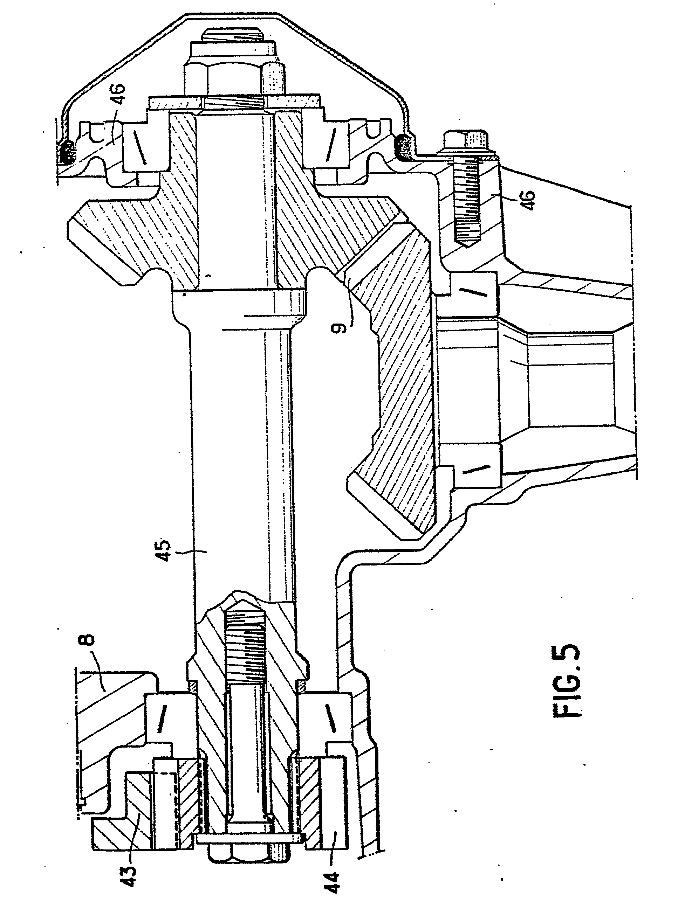

— la figure 5 est une vue en coupe correspondant à une partie de la figure 1.

Le dispositif de transmission à quatre roues motrices selon l'invention est disposé à la sortie d'une boîte de vitesse 15 qui est entraînée par un moteur 20. Dans le cas des figures cet ensemble moteur 20 boîte de vitesses 15 est disposé transversalement dans le véhicule. Le dispositif de transmission selon l'invention s'applique également à un groupe motopropulseur qui serait disposé longitudinalement dans le véhicule. Il faut noter également que dans le cas des figures le dispositif selon l'invention est monté sur un groupe motopropulseur disposé à l'avant du véhicule. Il est évident que ce dispositif pourrait s'appliquer à un groupe moto-propulseur disposé à l'arrière, et dans ce cas tout ce que l'on appelera essieu avant et essieu arrière dans la suite de la description deviendrait réciproquement essieu arrière et essieu avant.

Un carter d'embrayage 8 est disposé entre le moteur 20 et la boîte de vitesse 15, et ce carter d'embrayage 8 se combine avec le carter 3 de boîte de vitesse 15, et il est fermé par un carter de revoi 46.

L'ensemble du dispositif selon l'invention est disposé dans ces trois carters 8, 3, et 46.

La sortie de mouvement de la boîte de vitesses 15 entraîne un pignon d'attaque 1 qui engrène avec une couronne extérieure 2. Cette couronne extérieure 2 comporte une denture intérieure, qui est la couronne 4 d'un différentiel central 16. Ce différentiel central 16 à deux sorties de mouvements, la première sortie de mouvement se fait par le planétaire 6 dudit différentiel central 16, et l'autre sortie de mouvement s'effectue par le porte-satellites 18 dudit différentiel central 16. Le planétaire 6 commande l'essieu avant 17, tandis que le porte-satellites 18 commande l'autre essieu du véhicule c'est-à-dire l'essieu arrière. Un système auto-freiné est disposé entre le porte-satellites 18 et le planétaire 16, de manière à pouvoir transférer automatiquement une partie de l'énergie de l'essieu qui se trouverait en perte d'adhérence sur l'autre essieu.

Dans le cas des figures le système auto-freiné est un système visqueux 10. On pourrait également monter un système auto-freiné du type ensemble mécanique à rondelles de précharge. On pourrait également prévoir comme système auto-freiné un ensemble mécanique à ressorts axiaux de compression.

Le différentiel 19 de l'essieu avant 17, qui reçoit le mouvement par l'intermédiaire du planétaire 6 du différentiel central 16, est muni d'un système auto-freiné qui est disposé sur les sorties de mouvement de ce différentiel 19.

De la même manière un système auto-freiné est disposé sur les sorties de mouvement du différentiel de l'essieu arrière.

De même que pour le système auto-freiné disposé sur les sorties du différentiel central 19, le système auto-freiné disposé sur le différentiel 19 de l'essieu avant 17 ou sur le différentiel de l'essieu arrière, ces systèmes auto-freiné sont du type système visqueux 12. On pourrait également prévoir un système auto-freiné du type ensemble mécanique à rondelles de précharge. On pourrait également prévoir un système auto-freiné du type ensemble mécanique à ressorts axiaux de compression.

La sortie du mouvement pour commander l'essieu arrière s'effectue à partir du porte-satellites 18 du différentiel central 19. Ce différentiel 18 comporte une denture extérieure 43, qui engrène avec un pignon 44. Ce pignon 44 est solidaire d'un arbre de renvoi 45, ledit arbre de renvoi 45 étant lui-même solidaire du couple conique de renvoi 9.

Les systèmes visqueux 10 et 12 représentés sur les figures comprennent un ensemble multi-disques 21 avec un fluide à viscosité contrôlé, qui est enfermé entre un moyeu, une couronne, un flasque d'appui, et un flasque de fermeture; cet ensemble ayant ses propres moyens d'étanchéité. Le système visqueux 10 comporte ainsi un moyeu 22, une couronne 23, un flasque d'appui 24, et un flasque de fermeture 25 ; et le système visqueux 12 comporte un moyeu 26 une couronne 14 un flasque d'appui 27 et un flasque de fermeture 28.

Le différentiel central 16 est disposé à l'intérieur de la couronne extérieure 2. La couronne extérieure 2 se prolonge par une jante 31, qui est solidaire d'un moyeu 32. Du côté opposé à cette jante 31 est disposé le porte-satellites 18 qui comporte la denture extérieure 43. Des groupes de 2 satellites 5 et 47 sont montés sur des axes 7. Ces axes 7 sont supportés d'un côté par le porte-satellites 18, et de l'autre côté par un flasque 49. Ce flasque 49 est muni d'un dispositif de rondelles de friction 50 qui vient s'appliquer sur la jante 31. Chacun des satellites 5 engrène avec la couronne 4, et avec chacun des satellites 47 correspondant. Les satellites 47 engrènent à leur tour avec le planétaire 6. Le porte-satellites 18 est supporté dans le carter d'embrayage 8 par l'intermédiaire de roulements. La couronne 2 est supporté par l'intermédiaire de son moyeu 32 qui vient s'engager dans des roulements montés sur le carter 3 de boîte de vitesses 15.

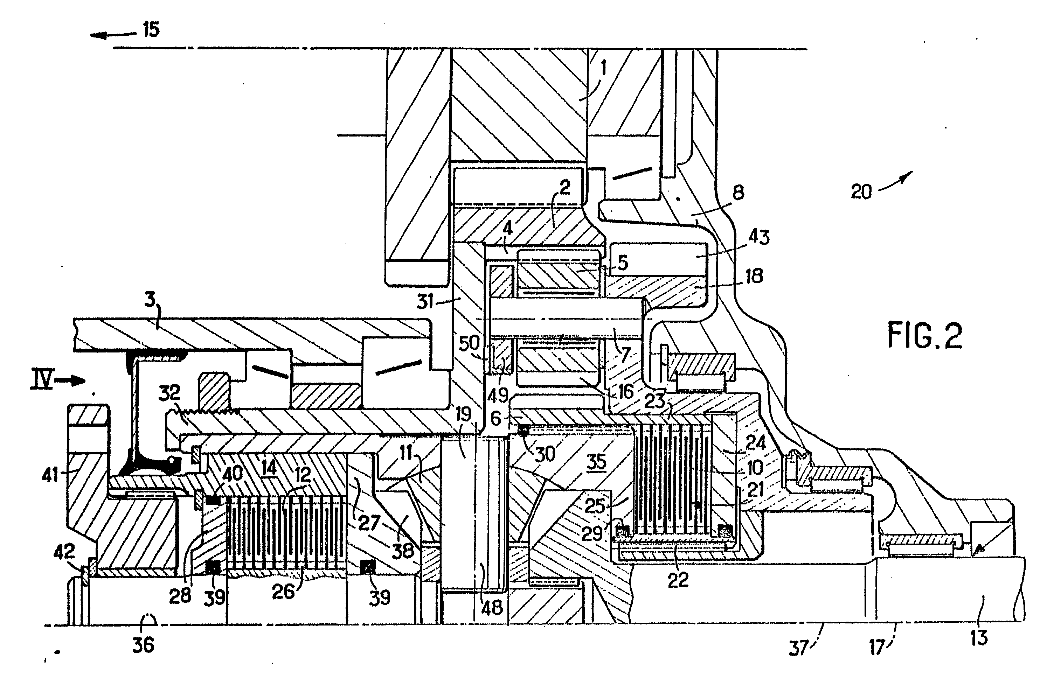

La figure 2 montre un premier mode de réalisation selon l'invention du système visqueux 10 qui vient se montre dans le différentiel central 16. Dans ce mode de réalisation, le système visqueux 10 à :
- sa couronne 23 qui est solidaire du planétaire 6 dudit différentiel central 16 ;
- son moyeu 22 qui est solidaire du porte-satellites 18 dudit différentiel central 16 ;
- son flasque d'appui 24 qui est solidaire de ladite couronne 23 ;
- son flasque de fermeture 25 qui est solidaire dudit planétaire 6 ;
- ses moyens d'étanchéité qui consistent en deux joints 29, qui sont disposés entre ledit flasque d'appui 24 et ledit flasque de fermeture 25 et pour chacun de ces flasques avec ledit moyeu 22 ; et un joint 30 disposé entre ledit planétaire 6 et le boîtier 35 du différentiel avant 19 ; ledit boitier 35 étant solidaire de la flasque de fermeture 25.

Dans le cas de la figure le moyeu 22 est solidaire du porte-satellites 18 par l'intermédiaire de cannelures, et de la même façon le flasque de fermeture 25 qui se prolonge par le boîtier 35 est solidaire du planétaire 6 au moyen de cannelures. De plus il faut remarquer que la couronne 23 et le flasque d'appui 24 viennent s'engager à l'intérieur du porte-satellites 18, et que de plus la couronne 23 vient se centrer à l'intérieur de ce porte-satellites 18.

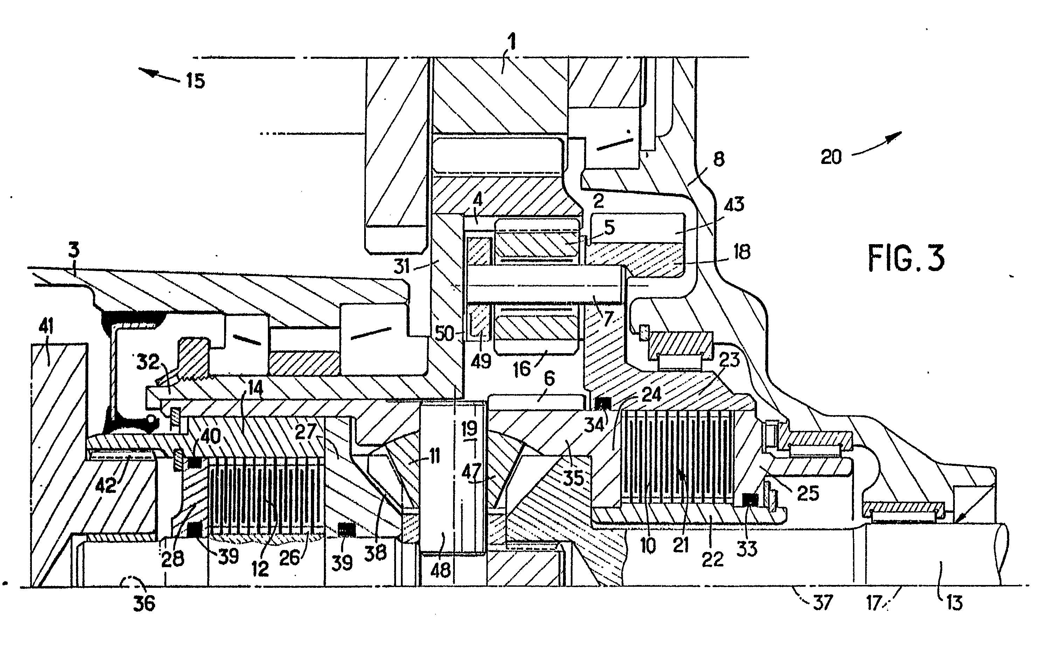

On voit sur la figure 3 un autre mode de réalisation du système visqueux 10, qui est disposé sur le différentiel central 16. Dans ce mode de réalisation le système visqueux 10 à :
- son moyeu 22 qui est solidaire du flasque d'appui 24 ;
- sa couronne 23 qui est solidaire du porte-satellites 18 dudit différentiel central 16 ;
- son flasque d'appui 24 qui est solidaire du planétaire 6 dudit différentiel central 16 ;
- son flasque de fermeture 25 qui est solidaire du porte-satellites 18 dudit différentiel central 16 ;
- ces moyens d'étanchéité, qui consistent en un joint 33 entre ledit flasque de fermeture 25 et ledit moyeu 22 ; et un joint 34 qui est disposé entre ledit porte-satellites 18 dudit différentiel central 16 et ledit flasque d'appui 24 solidaire du boîtier 35 du différentiel avant 19.

Dans un mode de réalisation de l'invention qui est représenté sur les figures 2 et 3 ; le différentiel 19 de l'essieu avant 17 et son système visqueux 12 sont montés l'un et l'autre à l'intérieur du planétaire 6 et du moyeu 32 de la couronne extérieure 2. Ainsi la couronne extérieure 2, le différentiel central 16 avec son système visqueux 10, le différentiel avant 19 avec son système visqueux 12, tous ces organes sont coaxiaux, et ont comme axe l'axe de l'essieu avant 17.

Le différentiel avant 19 à son boîtier 35, qui porte des satellites 11 par l'intermédiaire d'axes 48. Ces satellites 11 engrènent d'un côté avec un planétaire 37, qui est solidaire d'un arbre de sortie avant 13. Ce planétaire 37 vient se monter du côté du système visqueux 10. Les satellites 11 engrènent d'autre part avec un planétaire 38, qui vient se monter sur un arbre 36. Cet arbre 36 se prolonge de manière à se monter à l'intérieur du planétaire 37, et de façon à être solidaire avec ce planétaire 37 au moyen de cannelures. L'autre extrémité de l'arbre 36 vient s'engager dans un plateau d'accouplement 41. Ce plateau d'accouplement 41 vient ainsi se centrer sur l'arbre 36, et il constitue la deuxième sortie de mouvement de l'essieu avant 17.

Le système visqueux 12 qui est disposé sur le différentiel avant 19, se monte à l'intérieur du prolongement du boîtier 35. Ce prolongement de boîtier 35 vient lui-même se monter à l'intérieur du moyeu 32 de la couronne extérieure 2. Le système visqueux 12 à :
- son moyeu 26, qui est solidaire de l'arbre 36, et qui dans le cas des figures ne fait qu'un avec cet arbre 36 ;
- sa couronne 14 qui est solidaire du flasque d'appui 27, qui est lié au planétaire 38 ;
- son flasque de fermeture 28 ;
- ses moyens d'étanchéité qui consistent en deux joints 39 disposés respectivement entre ledit moyeu 26 c'est-à-dire l'arbre 36 et ledit flasque d'appui 27, et ledit flasque de fermeture 28 ; et un joint 40 disposé entre ledit flasque de fermeture 28 et ladite couronne 14.

La couronne 14 du système visqueux 12 est solidaire du plateau d'accouplement 41 par l'intermédiaire de cannelures. Ce plateau d'accouplement 41 vient se monter à l'intérieur de ladite couronne 14. Le moyeu 41 assure ainsi l'une des sorties de mouvement du différentiel avant 19, et il est lié à la roue correspondante. Le plateau d'accouplement 41 est centré dans le planétaire 38 au moyen de l'arbre 36. La position axiale du plateau d'accouplement 41 est assurer par la butée dudit plateau 41 contre l'extrémité de ladite couronne 14. Un système d'arrêt 42 vient assurer cette position axiale, et ce système d'arrêt 42 est disposé sur l'extrémité de l'arbre 36.

**Revendications**

1. Dispositif de transmission à quatre roues motrices comprenant en sortie de boîte de vitesses (15) un pignon d'attaque (1) entraînant une couronne extérieure (2), qui comporte une denture intérieure qui est la couronne (4) du différentiel central (16), dont le planétaire (6) commande l'un des essieux (17), et dont le porte-satellites (18) commande l'autre essieu, caractérisé en ce qu'un système auto-freiné du type système visqueux (10) est disposé entre le porte-satellites (18) et le planétaire (6) de manière à transférer automatiquement une partie de l'énergie de l'essieu en perte d'adhérence sur l'autre essieu; le moteur 20 et la boîte de vitesses (15) sont disposés transversalement par rapport à l'axe longitudinal du véhicule; le système visqueux (10, 12) comprend un ensemble multidisques (21) avec un fluide à viscosité contrôlée, qui est enfermé entre un moyeu (22, 26), une couronne (23, 14), un flasque d'appui (24, 27) et un flasque de fermeture (25, 28) et ayant des moyens d'étanchéité; le système visqueux (10), disposé sur le différentiel central (16) a:

— sa couronne (23), qui est solidaire du planétaire (6) du différentiel central (16),

— son moyeu (22), qui est solidaire du porte-satellites (18) dudit différentiel central (16),

— son flasque d'appui (24), qui est solidaire de ladite couronne (23),

— son flasque de fermeture (25), qui est solidaire dudit planétaire (6),

— ses moyens d'étanchéité qui consistent en deux joints (29) disposés entre ledit flasque de fermeture (25) et ledit moyeu (22); et un joint (30) disposé entre ledit planétaire (6) et le boîtier (35) du différentiel avant (19), solidaire dudit flasque de fermeture (25); un système auto-freiné du type système visqueux (12) est disposé entre les sorties de mouvement du différentiel (19) de l'essieu avant.

2. Dispositif de transmission à quatre roues motrices comprenant en sortie de boîte de vitesses (15) un pignon d'attaque (1) entraînant une couronne extérieure (2), qui comporte une denture intérieure qui est la couronne (4) du différentiel central (16), dont le planétaire (6) commande l'un des essieux (17), et dont le porte-satellites (18) commande l'autre essieu, caractérisé en ce qu'un système auto-freiné du type système visqueux (10) est disposé entre le porte-satellites (18) et le planétaire (6) de manière à transférer automatiquement une partie de l'énergie de l'essieu en perte d'adhérence sur l'autre essieu; le moteur 20 et la boîte de vitesses (15) sont disposés transversalement par rapport à l'axe longitudinal du véhicule; le système visqueux (10, 12) comprend un ensemble multidisques (21) avec un fluide à viscosité contrôlée, qui est enfermé entre un moyeu (22, 26), une couronne (23, 14), un flasque d'appui (24, 27) et un flasque de fermeture (25, 26) et ayant des moyens d'étanchéité; le système visqueux (10) disposé sur le différentiel central (16) a:

— son moyeu (22), qui est solidaire du flasque d'appui (24),

— sa couronne (23), qui est solidaire du porte-satellites (12) dudit différentiel central (16),

— son flasque d'appui (24), qui est solidaire du planétaire (6) dudit différentiel central (16),

— son flasque de fermeture (25), qui est solidaire du porte-satellites (12) dudit différentiel central (16),

— ses moyens d'étanchéité qui consistent en un joint (33), disposé entre ledit flasque de fermeture (25) et ledit moyeu (22); et un joint (34) disposé entre ledit porte-satellites (18) dudit différentiel central (16), et ledit flasque d'appui (24) solidaire du boîtier (35) du différentiel avant (19); un système auto-freiné du type système visqueux (12) est disposé entre les sorties de mouvement du différentiel (19) de l'essieu avant.

3. Dispositif de transmission à quatre roues motrices selon l'une des revendications 1 et 2, caractérisé en ce qu'un système auto-freiné est disposé sur les sorties de mouvement du différentiel de l'essieu arrière.

4. Dispositif de transmission à quatre roues motrices selon la revendication 1, caractérisé en ce que le système visqueux (12), disposé sur le différentiel avant (19), a:

— son moyeu (26) solidaire d'un arbre (36) lié à l'un des planétaires (37), dudit différentiel avant (19);

— sa couronne (14) solidaire du flasque d'appui (27), qui est lié à l'autre planétaire (38);

— son flasque de fermeture (28);

— ses moyens d'étanchéité, qui consistent en deux joints (39) disposés respectivement entre ledit moyeu (26) et ledit flasque d'appui (27) et ledit flasque de fermeture (28); et un joint (40) disposé entre ledit flasque de fermeture (28) et ladite couronne (14).

5. Dispositif de transmission à quatre roues motrices selon la revendication 4, caractérisé en ce que la couronne (14), est liée à la roue correspondante au moyen d'un plateau d'accouplement (41) solidaire de ladite couronne (14); ledit plateau d'accouplement (41) étant centré dans le planétaire (38) au moyen d'un arbre (36), et dont la position axiale est assurée par la butée dudit plateau (41) contre l'extrémité de ladite couronne (14), et un système d'arrêt.

6. Dispositif de transmission à quatre roues motrices selon la revendication 1, caractérisé en ce que le porte-satellites (18) du différentiel central (16) comporte une denture extérieure (43) qui commande un pignon (44); ledit pignon (44) étant solidaire du couple conique de renvoi (9) par l'intermédiaire d'un arbre de renvoi (45).

**Patentansprüche**

1. Vierradantriebsvorrichtung, mit einem Antriebsritzel (1) am Ausgang eines Getriebes (15), das ein äußeres Tellerrad (2) antreibt, welches eine Innenzahnung aufweist, die das Tellerrad (4) eines zentralen Differentials (16) darstellt, dessen Achswellenkegelrad (6) eine der Achsen (17) steuert und dessen Planetenkreuz (18) die andere Achse steuert, dadurch gekennzeichnet, daß eine selbstbremsende viskose Anordnung (10) zwischen dem Planetenkreuz (18) und dem Achswellenkegelrad (6) derart angeordnet ist, daß automatisch ein Teil der Achsenergie bei Verlust der Bodenhaftung auf die andere Achse übertragen wird; der Motor (20) und das Getriebe (15) sind quer zur Längsrichtung des Fahrzeugs eingebaut; die viskose Anordnung (10, 12) weist eine Anordnung mit einer Vielzahl von Scheiben (21) auf, sowie ein Fluid mit gesteuerter Viskosität, das zwischen einer Nabe (22, 26), einem Tellerrad (23, 14), einem Stützflansch (24, 27) und einem Schließflansch (25, 28) eingeschlossen ist, die mit Dichtmitteln versehen sind; die viskose Anordnung (10) in dem zentralen Differential (16) weist auf:

— ein Tellerrad (23), das fest mit dem Achswellenkegelrad (6) des zentralen Differentials (16) verbunden ist;

— eine Nabe (22), die fest mit dem Planetenkreuz (18) des zentralen Differentials (16) verbunden ist;

— einen Stützflansch (24), der fest mit dem Tellerrad (23) verbunden ist;

— einen Stützflansch (25), der fest mit dem Achswellenkegelrad (6) verbunden ist;

— eine Abdichtanordnung, bestehend aus zwei Dichtungen (29), die zwischen dem Schließflansch (25) und der Nabe (23) angeordnet sind und aus einer Dichtung (30), die zwischen dem Achswellenkegelrad (6) und dem Gehäuse (35) des vorderen Differentials (19) angeordnet und fest mit dem Schließflansch (25) verbunden ist;

eine selbstbremsende viskose Anordnung (12) ist zwischen den Ausgängen des Differentials (19) und der Vorderachse angeordnet.

2. Vierradantriebsvorrichtung, mit einem Antriebsritzel (1) am Ausgang eines Getriebes (15), das ein äußeres Tellerrad (2) antreibt, welches eine Innenzahnung aufweist, die das Tellerrad (4) eines zentralen Differentials (16) darstellt, dessen Achswellenkegelrad (6) eine der Achsen (17) steuert und dessen Planetenkreuz (18) die andere Achse steuert, dadurch gekennzeichnet, daß eine selbstbremsende viskose Anordnung (10) zwischen dem Planetenkreuz (18) und dem Achswellenkegelrad (6) derart angeordnet ist, daß automatisch ein Teil der Achsenergie bei Verlust der Bodenhaftung auf die andere Achse übertragen wird; der Motor (20) und das Getriebe (15) sind quer zur Längsrichtung des Fahrzeugs eingebaut; die viskose Anordnung (10, 12) weist eine Anordnung mit einer Vielzahl von Scheiben (21) auf, sowie ein Fluid mit gesteuerter Viskosität, das zwischen einer Nabe (22, 26), einem Tellerrad (23, 14), einem Stützflansch (24, 27) und einem Schließflansch (25, 28) eingeschlossen ist, die mit Dichtmitteln versehen sind; die viskose Anordnung (10) in dem zentralen Differential (16) weist auf:

— eine Nabe (22), die fest mit dem Stützflansch (24) verbunden ist;

— ein Tellerrad (23), das fest mit dem Planetenkreuz (12) des zentralen Differentials (16) verbunden ist;

— einen Stützflansch (24), der fest mit dem Achswellenkegelrad (6) des zentralen Differentials (16) verbunden ist;

— einen Schließflansch (25), der fest mit dem Planetenkreuz (18) des zentralen Differentials (16) verbunden ist;

— eine Abdichtanordnung, bestehend aus einer Dichtung (33), die zwischen dem Schließflansch (25) und der Nabe (22) angeordnet ist und aus einer Dichtung (34), die zwischen dem Planetenkreuz (18) des zentralen Differentials (16) und dem Stützflansch (24) angeordnet ist und fest mit dem Gehäuse (35) des vorderen Differentials (19) verbunden ist; eine selbstbremsende viskose Anordnung (12) ist zwischen den Antriebsausgängen des Differentials (19) und der Vorderachse angeordnet.

3. Vierradantriebsvorrichtung nach einem der Ansprüche 1 und 2, dadurch gekennzeichnet, daß eine selbstbremsende Anordnung an den Antriebsausgängen des Differentials der Hinterachse vorgesehen ist.

4. Vierradantriebsvorrichtung nach Anspruch 1, dadurch gekennzeichnet, daß die viskose Anordnung (12) am vorderen Differential (19) aufweist:

— eine Nabe (26), die fest mit einer Welle (36) verbunden ist, die mit einem der Achswellenkegelräder (37) des vorderen Differentials (19) verbunden ist;

— ein Tellerrad (14), das fest mit dem Stützflansch (27) verbunden ist, welches mit dem anderen Achswellenkegelrad (38) verbunden ist;

— einen Schließflansch (28);

— eine Abdichtanordnung, die aus zwei Dichtungen (39) besteht, die zwischen der Nabe (26) und dem Stützflansch (27) bzw. dem Schließflansch (28) angeordnet sind und aus einer Dichtung (40), die zwischen dem Schließflansch (28) und dem Tellerrad (14) angeordnet ist.

5. Vierradantriebsvorrichtung nach Anspruch 4, dadurch gekennzeichnet, daß das Tellerrad (14) mit dem entsprechenden Rad mittels einer Kupplungsplatte (41) verbunden ist, welche fest mit dem Tellerrad (14) verbunden ist; die Kupplungsplatte (41) ist im Achswellenkegelrad (38) mittels einer Welle (36) zentriert, wobei die axiale Stellung durch den Anschlag der Platte (41) gegen das Ende des Tellerrades (14) und eine Haltevorrichtung gewährleistet ist.

6. Vierradantriebsvorrichtung nach Anspruch 1, dadurch gekennzeichnet, daß das Planetenkreuz (18) des zentralen Differentials (16) eine Außenzahnung (43) aufweist, welche ein Ritzel (44) steuert; das Ritzel (44) ist fest mittels einer Umkehrwelle (45) mit dem Umkehr-Kegelräderpaar (9) verbunden.

**Claims**

1. A four wheel drive transmission arrangement comprising at the gearbox (15) output a drive pinion (1) which drives an external ring gear (2) comprising an internal tooth arrangement which is the ring gear (4) of the central differential (16), the sun gear (6) of which actuates one of the axles (7) while the planet gear carrier (18) thereof actuates the other axle, characterised in that a self-braked system (10) of the viscous system type is disposed between the planet gear carrier (18) and the sun gear (6) in such a way as automatically to transfer a part of the energy from the axle which has a loss of grip to the other axle; the engine (20) and the gearbox (15) are disposed transversely with respect to the longitudinal axis of the vehicle; the viscous system (10, 12) comprises a multi-disc assembly (21) with a fluid of controlled viscosity, which is enclosed between a hub (22, 26), a ring (23, 14), a support flange (24, 27) and a closure flange (25, 28), and having sealing means; the viscous system (10) which is disposed on the central differential (16) has:

– its ring (23) which is fixed with respect to the sun gear (6) of the central differential (16),

– its hub (22) which is fixed with respect to the planet gear carrier (18) of said central differential (16),

– its support flange (24) which is fixed with respect to said ring (23),

– its closure flange (24) which is fixed with respect to said sun gear (6), and

– its sealing means which consist of two seals (29) disposed between said closure flange (25) and said hub (22); and a seal (30) disposed between said sun gear (6) and the casing (35) of the front differential (19), which is fixed with respect to said closure flange (25); a self-braked system (12) of the viscous system type is disposed between the motion outputs of the differential (19) of the front axle.

2. A four wheel drive transmission arrangement comprising at the gearbox (15) output a drive pinion (1) which drives an external ring gear (2) comprising an internal tooth arrangement which is the ring gear (4) of the central differential (16), the sun gear (6) of which actuates one of the axles (7) while the planet gear carrier (18) thereof actuates the other axle, characterised in that a self-braked system (10) of the viscous system type is disposed between the planet gear carrier (18) and the sun gear (6) in such a way as automatically to transfer a part of the energy from the axle which has a loss of grip to the other axle; the engine (20) and the gearbox (15) are disposed transversely with respect to the longitudinal axis fo the vehicle; the viscous system (10, 12) comprises a multi-disc assembly (21) with a fluid of controlled viscosity, which is enclosed between a hub (22, 26), a ring (23, 14), a support flange (24, 27) and a closure flange (25, 28), and having sealing means; the viscous system (10) which is disposed on the central differential (16) has:

– its hub (22) which is fixed with respect to the support flange (24),

– its ring (23) which is fixed with respect to the planet gear carrier (18) of said central differential (16),

– its support flange (24) which is fixed with respect to the sun gear (6) of said central differential (16),

– its closure flange (25) which is fixed with respect to the planet gear carrier (18) of said central differential (16), and

– its sealing means which consist of seal (33) disposed between said closure flange (25) and said hub (22); and a seal (34) which is disposed between said planet gear carrier (18) of said central differential (16) and said support flange (24) which is fixed with respect to the casing (35) of the front differential (19); a self-braked system (12) of the viscous system type is disposed between the motion outputs of the differential (19) of the front axle.

3. A four wheel drive transmission arrangement according to one of claims 1 and 2 characterised in that a self-braked system is disposed on the motion outputs of the differential of the rear axle.

4. A four wheel drive transmission arrangement according to claim 1 characterised in that the viscous system (12) disposed on the front differential (19) has:

its hub (26) fixed with respect to a shaft (36) connected to one of the sun gears (37) of said front differential (19);

– its ring (14) fixed with respect to the support flange (27) which is connected to the other sun gear (38);

– its closure flange (28); and

– its sealing means which consist of two seals (39) disposed respectively between said hub (26) and said support flange (27), and said closure flange (28); and a seal (40) disposed between said closure flange (28) and said ring (14).

5. A four wheel drive transmission arrangement according to claim 4 characterised in that the ring (14) is connected to the corresponding wheel by means of a coupling plate (41) which is fixed with respect to said ring (14); said coupling plate (41) being centered in the sun gear (38) by means of a shaft (36), the axial position thereof being ensured by the abutment of said plate (41) against the end of said ring (14), and a stop system.

6. A four wheel drive transmission arrangement according to claim 1 characterised in that the planet gear carrier (18) of the central differential (16) comprises an external tooth arrangement (43) which actuates a pinion (44); said pinion (44) being fixed with respect to the bevel gear assembly (9) by way of a countershaft (45).

AR.D

AR.G

AV.D

AV.G

46

17

20

8

15

FIG.1

FIG.2

FIG.3

EP 0 264 513 B1

FIG. 4

FIG.5